# EUROPEAN PATENT SPECIFICATION

(11) **EP 0 447 899 B1**
(45) Date of publication and mention of the grant of the patent: **18.06.1997**
(21) Application number: 91103625.9
(22) Date of filing: 08.03.1991
(51) Int. Cl.: B62K 11/04

(54) **Frame construction for a motorcycle type vehicle**
Rahmenanordnung für motorradartiges Fahrzeug
Construction du cadre pour véhicule du type motocyclette

(30) Priority: 09.03.1990 JP 58822/90; 31.01.1991 JP 319/90
(43) Date of publication of application: 25.09.1991
(73) Proprietor: YAMAHA HATSUDOKI KABUSHIKI KAISHA, Iwata-shi Shizuoka-ken, 438 (JP)
(72) Inventor: Katsura, Takehisa, Shizuoka-ken 438 (JP)
(74) Representative: Grünecker, Kinkeldey, Stockmair & Schwanhäusser Anwaltssozietät

(56) References cited:
- EP-A- 0 207 618
- US-A- 4 660 854
- US-A- 4 694 929
- US-A- 4 796 901
- MOTORRAD. vol. 49, 25 March 1967, STUTTGART DE Ra: "Production-Racer von JAWA für 1967"
- PATENT ABSTRACTS OF JAPAN vol. 14, no. 159 (M-956)(4102) 28 March 1990, & JP-A-2 20484 (YAMAHA) 24 January 1990,
- PATENT ABSTRACTS OF JAPAN vol. 13, no. 593 (M-914)(3941) 27 December 1989, & JP-A-1 249584 (SUZUKI MOTOR) 04 October 1989,

## Description

This invention relates to frame construction for a motorcycle type of vehicle having a head pipe assembly including a head pipe adapted to journal a front wheel for steering movement, a pair of side main frame members affixed to said head pipe assembly and extending downwardly and rearwardly therefrom to a pivot point for a rear wheel suspension and a centre main frame member affixed to said head pipe assembly and extending rearwardly therefrom, wherein the centre main frame member extends at a different angle to the horizontal than said pair of side main frame members and a cross member means is provided affixing said side main frame members to each other rearwardly of said head pipe and a down tube assembly affixed to the head pipe between the side main frame members is provided.

The desirability of maintaining lightweight for motorcycles as well as a low center of gravity is well known. Of course, in addition to maintaining a lightweight the motorcycle and particularly its frame construction must be extremely strong so as to resist the loads encountered when operating a motorcycle. One type of frame construction which is receiving considerable attention is that of the "Delta Box" type. With this type of frame, a pair of box shaped fabricated main frame members extend downwardly and rearwardly in almost a straight line from the head pipe to a pivot point for the rear wheel suspension. This type of frame construction has many of the desirable advantages called for in frame constructions. However, certain types of motorcycle application, such as moto-crossing, place abnormally high loads on the frame, particularly from the front wheel.

One way in which the frame construction can be reinforced is by providing a center main frame member which is affixed to the head pipe at its forward end and is affixed to the pair of main frame members at a point spaced therefrom by a cross member assemblage. However, previous constructions of this type have placed the center main frame member at the same angle as the pair of side main frame members and hence have not fully triangulated and strengthen the construction. In addition, the center main frame member has been attached to the head pipe previously a point above the side main frame members and thus results in a triangular configuration when viewed in transversed cross sections which does not permit maximum space utilization and also which provides an uncomfortable seating arrangement.

A frame construction as indicated at the beginning is known from US-A-4 660 854. However, this frame construction is not satisfactory with respect to the shock absorber arrangement and the rigidity of the head pipe connection.

It is therefore an objective of the invention to provide an improved frame construction for a motorcycle, with high rigidity, compactness and a neat appearance.

According to the present invention, the above-mentioned objective is performed in that, the front end of the centre main frame member is affixed to a lower portion of the head pipe assembly while the side main frame members are affixed to the upper end thereof, and that the rear end of the centre main frame member directly supports an upper end of a single rear shock absorber which is substantially disposed in a centre area of the vehicle, and that the down tube assembly comprises a single down tube.

Preferred embodiments of the present invention are laid down in the subclaims.

In the following the present invention is explained in greater detail referring to embodiments of the new frame construction for a motorcycle and also referring to the accompanying drawings, wherein:
Figure 1 is a side elevation view of a motorcycle having a frame constructed in accordance with an embodiment of the invention.
Figure 2 is a top plan view showing primarily the frame of the motorcycle and certain components associated therewith.
Figure 3 is an enlarged side elevational view showing the frame construction at the upper portion thereof and in vicinity to the head pipe.
Figure 4 is a cross sectional view taken along the line 4-4 of Figure 3.
Figure 5 is a bottom plan view of the frame taken generally in the direction of the arrow 5 in Figure 3.
Figure 6 is a front elevational view of the frame and shows primarily the lower portion thereof.
Figure 7 is a cross sectional view taken along the line 7-7 of Figure 6.
FIgure 8 is a cross sectional view taken along the line 8-8 of Figure 6.
Figure 9 is a side elevational view showing the lower portion of the frame assembly in the area of the pivot for the rear wheel suspension.
Figure 10 is a top plan view of the area of the frame shown in Figure 9.
Figure 11 is a further side elevational view, in part similar to Figure 9, showing more of the rear wheel suspension mechanism and with a portion broken away to show the pivot point for the rear wheel suspension.
Figure 12 is a cross sectional view taken generally along the line 12-12 of Figure 11.
Figure 13 is a cross sectional view taken along the line 13-13 of Figure 9 and shows the arrangement for attaching the foot pegs.
Figure 14 is a side elevational view, in part similar to Figures 9 and 11, and shows further components of the frame assembly.
Figure 15 is a partial side elevational view, in part similar to Figure 1, but on a larger scale and showing a second embodiment of the invention.
Figure 16 is a side elevational view of the frame of this embodiment.
Figure 17 is a top plan view showing primarily the frame construction of this embodiment of the invention.
Figure 18 is a cross sectional view taken along the line 18-18 of Figure 17.

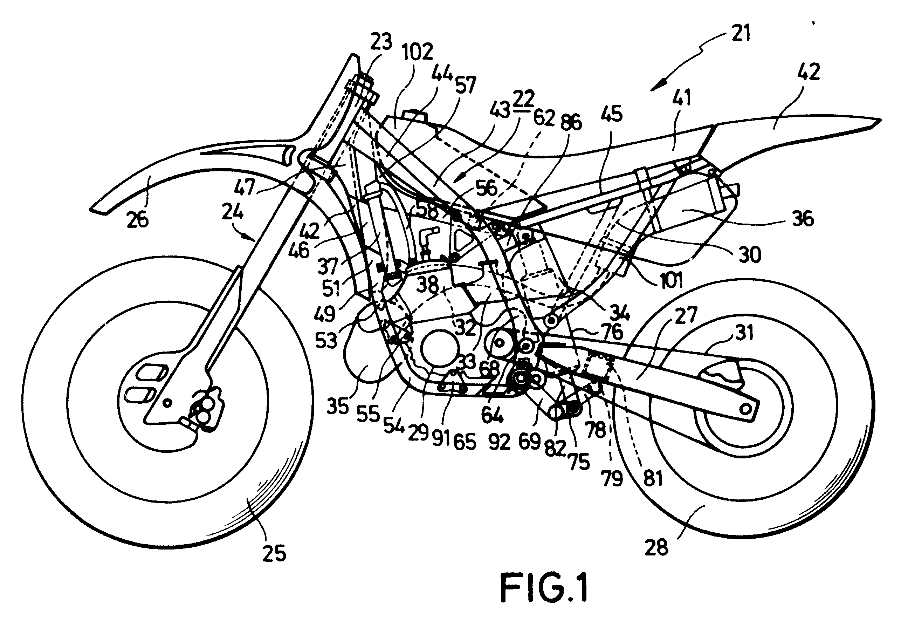

Referring now in detail to the drawings and initially primarily to Figure 1, a motorcycle constructed in accordance with a first embodiment of the invention is identified generally by the reference numeral 21. The motorcycle 21 includes a frame, indicated generally by the reference numeral 22 and constructed in accordance with an embodiment of the invention. Frame 22 includes a head pipe 23 that journals a front fork assembly 24 for steering movement about a generally vertically upright steering axis which is inclined somewhat toward the rear. A front wheel 25 is suspended at the lower end of the front fork 24 in a known manner. A front fender 26 is also carried by the front fork 24 and overlies the front wheel 25.

A trailing arm 27, which is pivotally supported on the frame assembly 22 in a manner to be described, carries a rear wheel 28. The rear wheel 28 is driven from an internal combustion engine 29 in a manner to be described and which contains a change speed transmission in its crankshaft for driving the rear wheel 28 through a chain 31 in a known manner.

Although the engine 29 may be of any type, it is, in the illustrated embodiment, being depicted as the reciprocating water cooled type having a cylinder 32 that is generally disposed in a upright condition and which is supplied with a fuel/air charge by a rear mounted carburetor 33 that draws air from an air inlet device and air cleaner 34. The exhaust gases exit the engine 29 through an exhaust pipe 35 that extends forwardly and wraps around the side of the engine 29. The exhaust pipe discharges into a muffler 36 that is mounted at the rear portion of the frame assembly 22 on one side of the motorcycle for discharge to the atmosphere.

In conjunction with the liquid cooling system for the engine 29, there is provided a pair of radiators 37 that are mounted forwardly on the frame and which circulates water through the cooling jacket of the engine 29 through supply and return conduits 38 and 39.

A seat 41 is supported on the frame assembly and is designed to accommodate a single rider. Rearwardly of the seat 41, a fender, shown in phantom and identified by the reference numeral 42, overlies the rear wheel 28.

The construction of the motorcycle as thus far described may be considered to be generally conventional, except for the frame assembly, which will now be described by particular reference to the remaining figures.

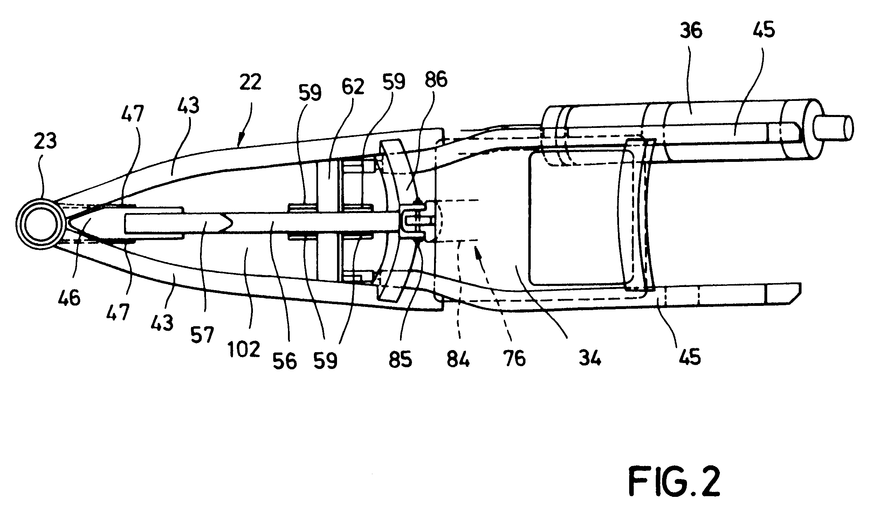

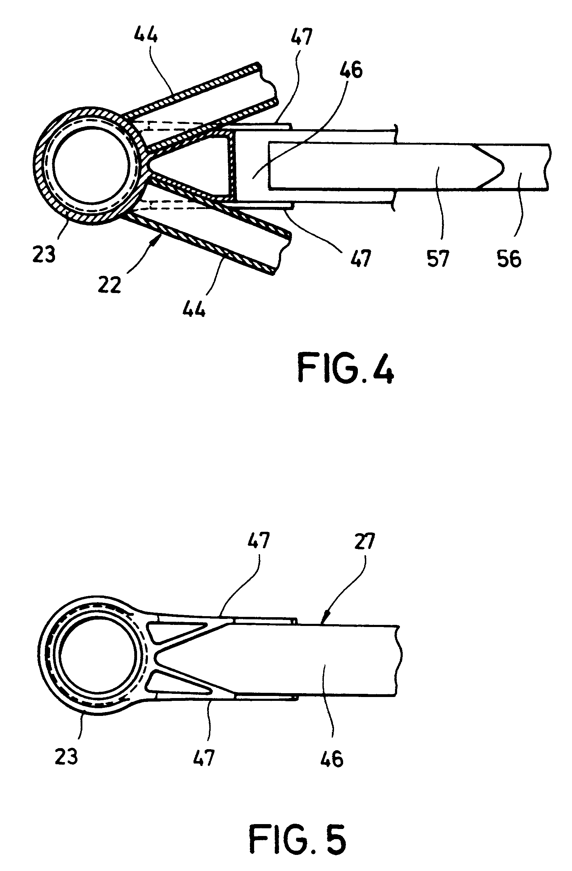

Referring now to Figures 2 through 5 in addition to Figure 1, the frame assembly 22, as already noted, includes the head pipe 23. The frame assembly 22 is preferably formed from a series of fabricated members which are formed from a lightweight material such as aluminum alloy and which are secured to each other, as by welding. The head pipe 23 has affixed to it at opposite sides thereof, a pair of side main frame members 43 which have a box like configuration and which are affixed to the upper portion of the head pipe 23, as by welding. Triangular reinforcing sections 44 are affixed to the lower portion of the main frame members 43 and, in effect, form portions thereof to provide extremely high rigidity. the side main frame members 43 extend generally rearwardly and downwardly toward a pivot point, to be described, for the trailing arm 26. As may be best seen in Figure 2, the side main frame members 43 diverge from the head pipe 23 and then turn and extend generally in a longitudinal direction along the frame 22 so as to afford a convenient riding position for a rider seated on the seat 41. A pair of seat rails 45 are affixed to the side main frame members 43 toward their rear ends and extend in a somewhat upward direction rearwardly so as to support the seat 41 and rear fender 42.

A down tube assembly comprised of a first, generally box shaped member 46 is affixed to the head pipe 23 between the side main frame members 43 and by means including a bifurcated section 47 of the head pipe 23 which extends rearwardly and downwardly. Down tube 46 further includes a reinforcing assembly 48 which extends downwardly to form a box like section 49 that is reinforced by internal plates 51 and 52 and which has a further portion 53 that receives the upper ends of down tube extensions 54. These down tube extensions 54 extend downwardly and then bent rearwardly beneath the engine 29. A pair of transversely spaced apart engine mounts 55 are affixed to the upper ends of the down tube extensions 54 and mount the top forward portion of the engine 29.

In order to add to the rigidity of the frame 22 and particularly to absorb forces exerted through the front wheel 25, there is provided a center main frame member 56 which is affixed to the head pipe assembly 23 by means of upper and lower gusset assemblies 57 and 58 which are, generally, affixed to the upper portion of the down tube 46. As a result, the center main frame member 56 is affixed to the lower portion of the head pipe assembly 23 while the outer side main frame members 43 are affixed to the upper end thereof. Also, it should be noted that the center main frame member 56 extends generally horizontally while the side main frame members 43 extends generally in a rearward and downward direction. Hence, this provides a triangulation which adds to the strength of the frame assembly 22.

A further engine mount 59 is affixed to the main frame member 56 rearwardly of the head pipe 23 and provides further support for the engine 29. The engine mounting bracket 59 is affixed to the center main frame member 56 by means of a pair of spaced bolt assembly 61 and a reinforcing cross member 62 extends outwardly from the opposite sides of the side main frame members 43 between the bolt assemblies 61 so as to provide further rigidity.

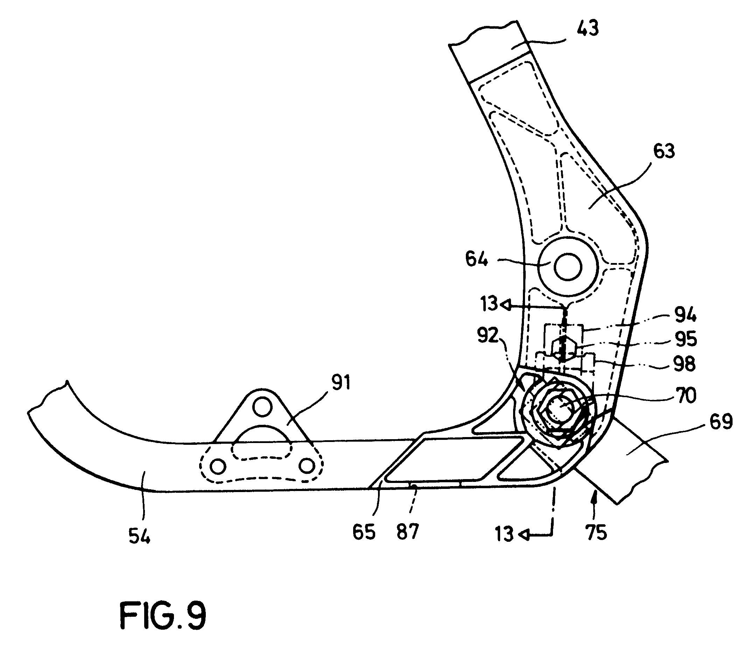

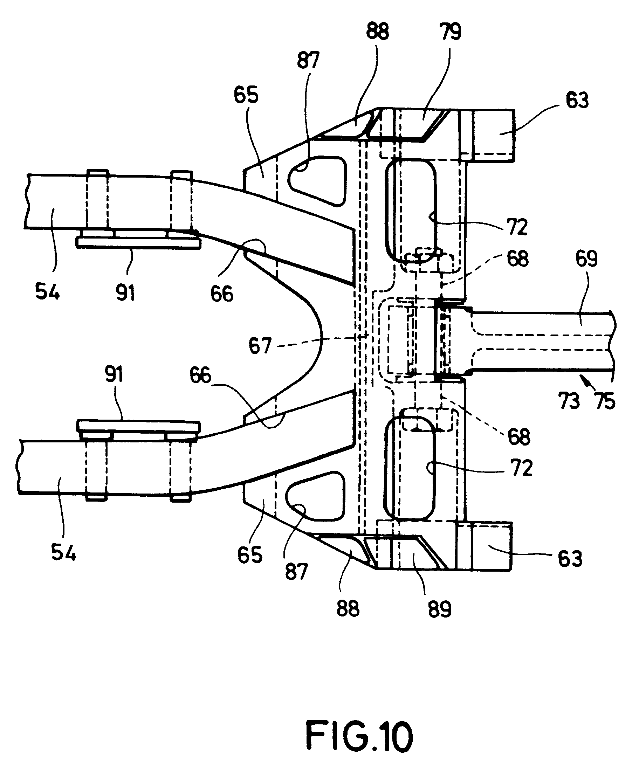

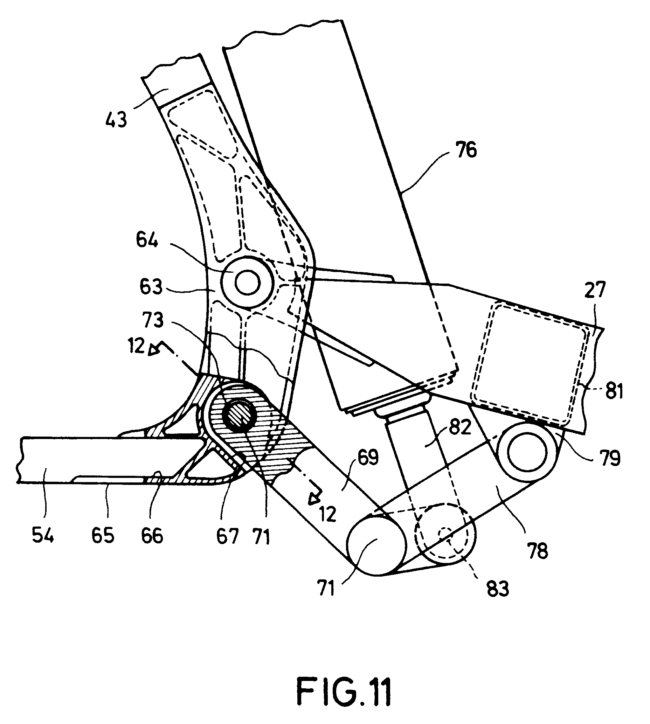

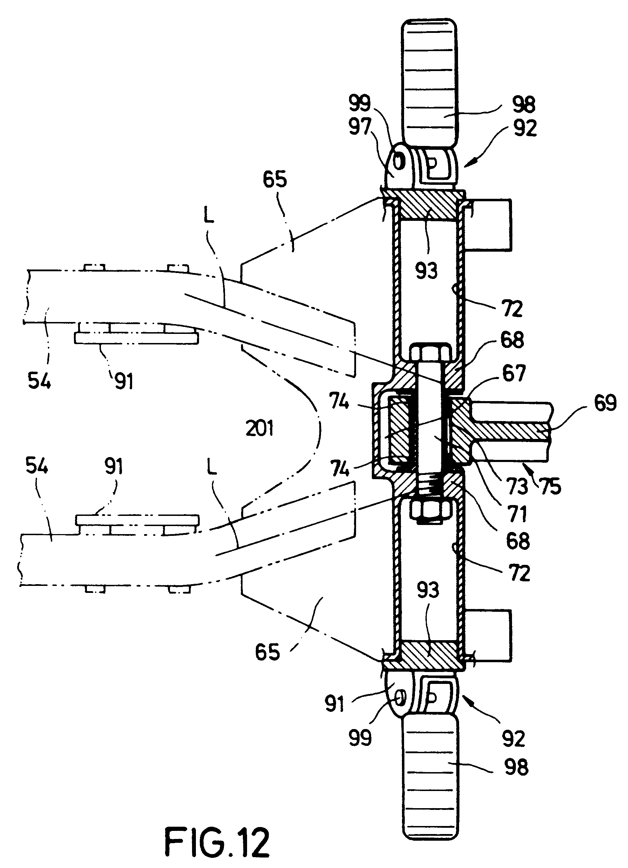

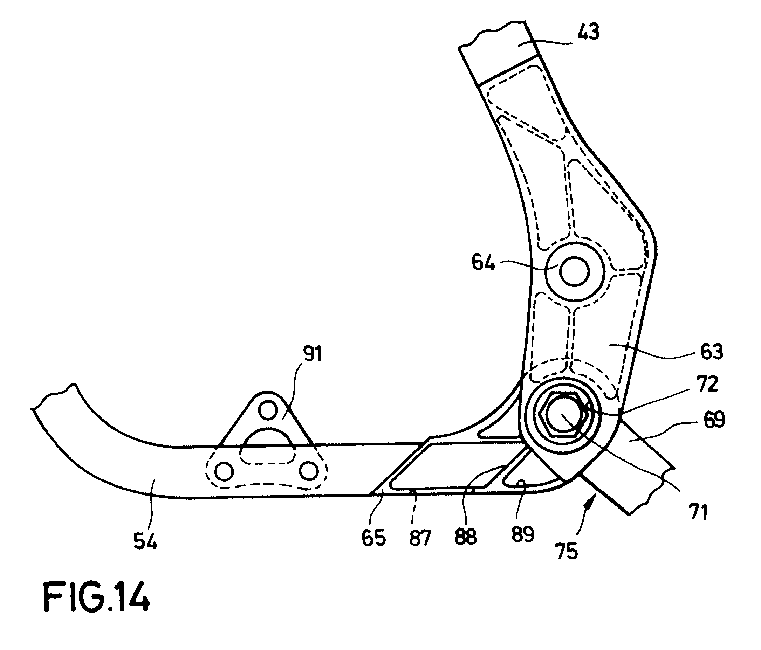

Turning now primarily to Figures 9 through 14 in addition to Figure 1, it will be seen that the rear ends of the side main frame members 43 and of the down tubes 54 are affixed to a rear suspension supporting member 63 which may be formed as a weldment or casting. The rear suspension supporting member 63 carries a pivot pin 64 which forms the journal for the forward end of the trailing arm 27. The member 63 also includes an aluminum alloy extrusion 65 that defines a pair of socket openings 66 that receive the rear ends of the down tubes 54 and to which they are affixed as by welding. This construction may be best seen in Figures 9 through 11, 12 and 14. As may be seen in Figure 12, the rear ends of the down tubes 54 are bent inwardly toward a longitudinally extending center plane of the motorcycle 21 along the lines L.

The extrusion 65 is provided with a central recess 67 defined by a pair of spaced apart walls 68 into which one end of a suspension link 69 extends. The link 69 is pivotally supported by means of a pivot bolt 71 that is accessible through openings 72 formed transversely in the extrusion 65. The pivot bolt 71 carries an anti-friction bearing 73, the ends of which are closed by seals 74 for journaling the suspension link 69. The suspension link 69 comprises a portion of a linkage system, indicated generally by the reference numeral 75 for loading a suspension element, indicated generally by the reference numeral 76 for controlling the movement of the trailing arm 27 and rear wheel 28.

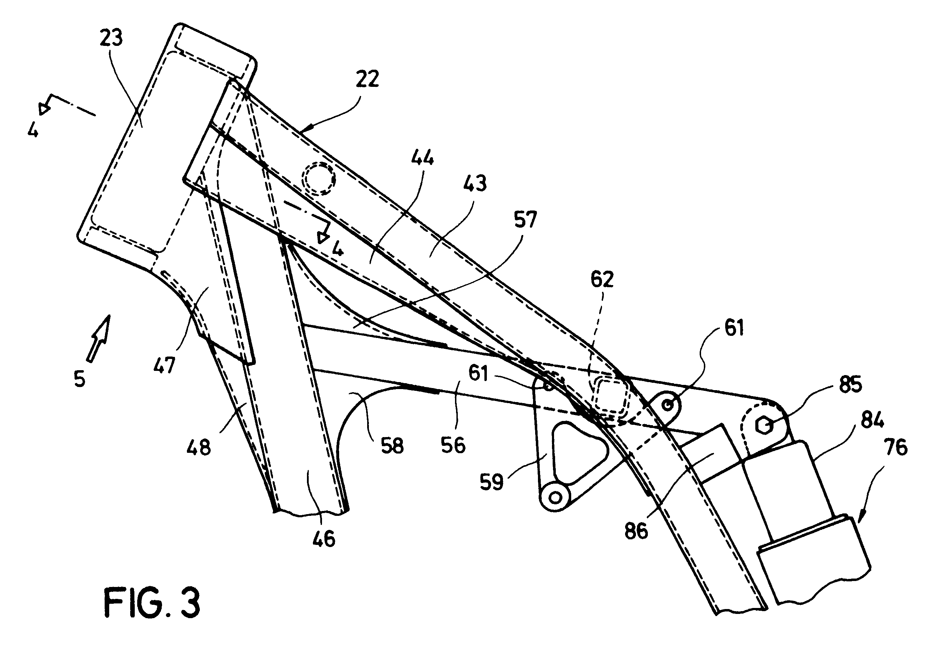

The opposite end of the link 69 is connected by means of a pivot pin 77 to the forward end of a second link 78. The second link 78 is pivotally supported on a bracket 79 that is affixed to a cross member 81 of the trailing arm 27. A piston rod 82 of the suspension element 76 is connected by means of a pivot pin 83 to an extension of the linkage system for loading the suspension element 76 upon suspension travel. The upper end of the suspension element 76 (Figure 3) carries a mounting trunion 84 that is connected by means of a pivot bolt 85 to an extension of the center main frame member 56 adjacent a cross member 86 that connects the center main frame member 56 with the side main frame members 43 for added rigidity.

The extrusion 65 is provided with a plurality of lightening holes such as vertically extending holes 87 and end recesses 88 and 89 so as to decrease the overall weight of the extrusion 65 and frame 22. Adjacent the extrusion 65, there is provided a further pair of engine mounting brackets 91 that are affixed to the rear ends of the down tubes 54 adjacent the extrusion 65. The engine unit 29 is mounted on these mounting brackets 91 in a suitable manner.

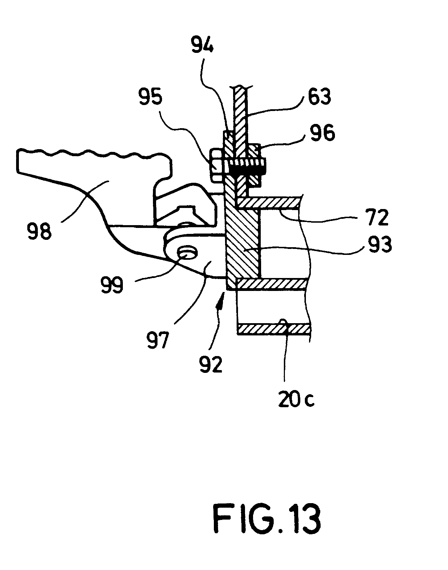

Extrusion 65 is also adapted to mount a pair of foot peg assemblies, each indicated generally by the reference numeral 92. These foot peg assemblies 92 are shown in most detail in Figures 12 and 13 and include plug-like members 93 that extend into the openings 72 and close them. A flange 94 of the plug-like member 93 passes a bolt 95 which is held in place by a nut 96 to secure the plug-like member 93 into position. A trunion portion 97 pivotally supports a foot peg 98 on a pivot pin 99 for movement to an extended position as shown in Figure 12 or a retracted position as shown in phantom in Figure 9.

Referring again to Figure 1 and solely to this figure, the seat rails 45 are supported by seat pillar rails 101 which are, in turn, affixed to the member 63 in an appropriate manner.

A fuel tank 102 is supported on the main frame member and generally extends down into the area between the main frame members and around the centre main frame member 56. The fuel tank 102 is provided with a filler neck that is accessible forwardly of the seat. In addition, deporting tank portions 103 may be employed to secure the fuel tank 102 to the center main frame member 56.

The radiators 37 are provided with radiator covers (not shown) which blend into the fuel tank 102 and seat 41 so as to provide a smooth overall configuration to the exterior of the motorcycle.

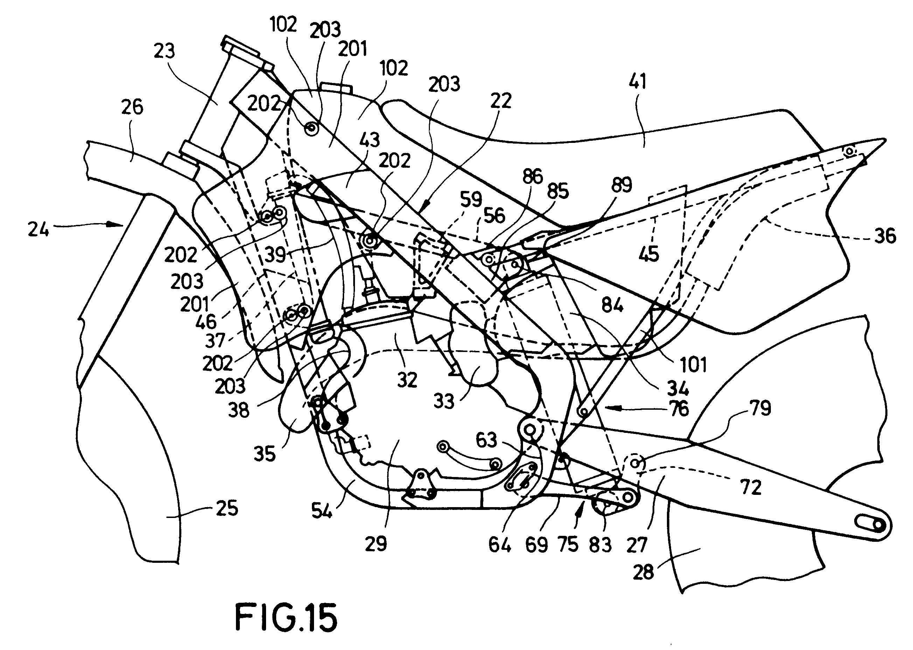

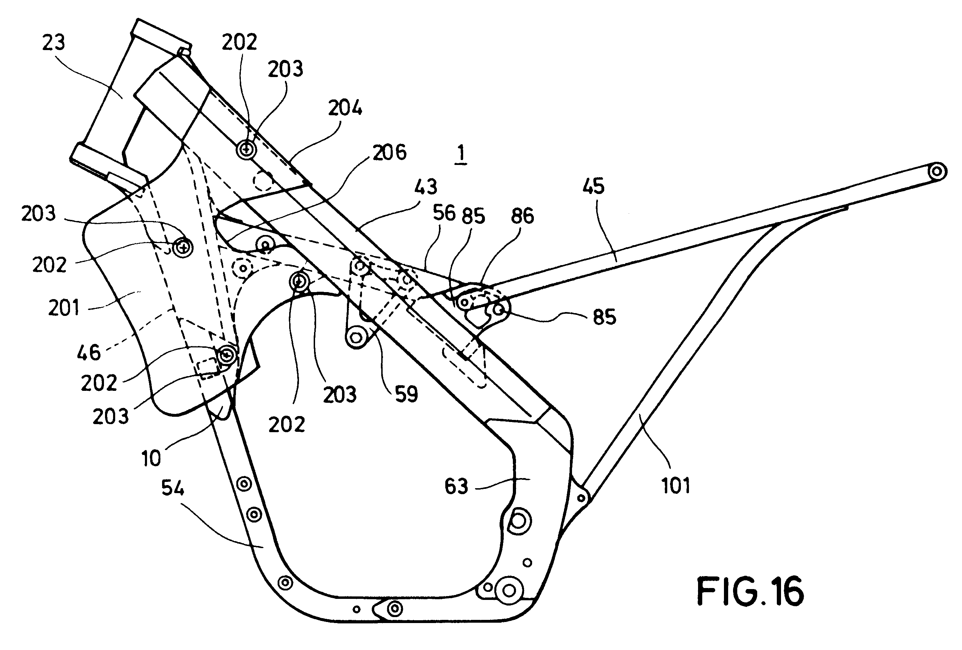

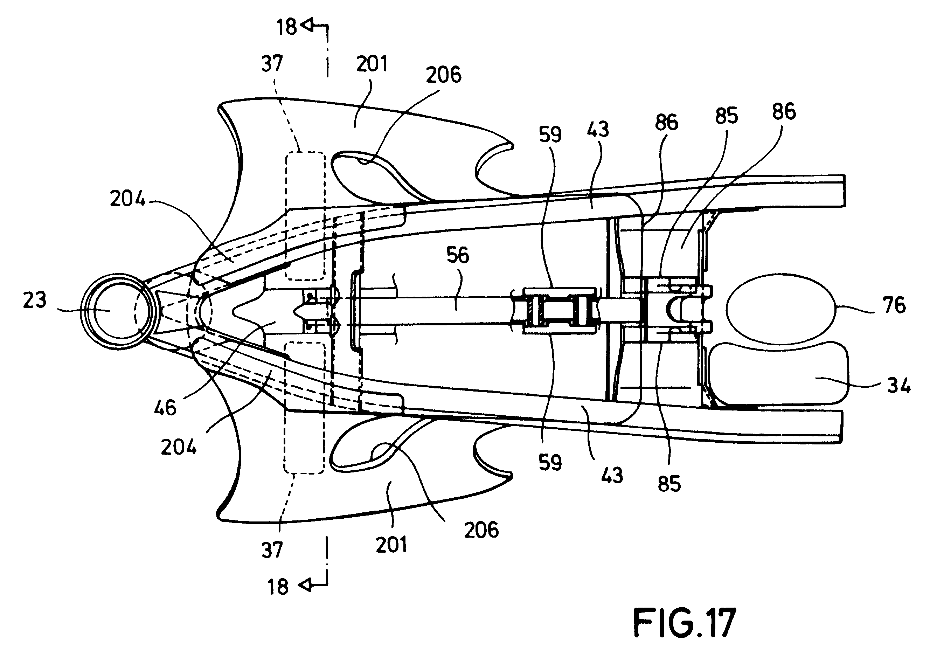

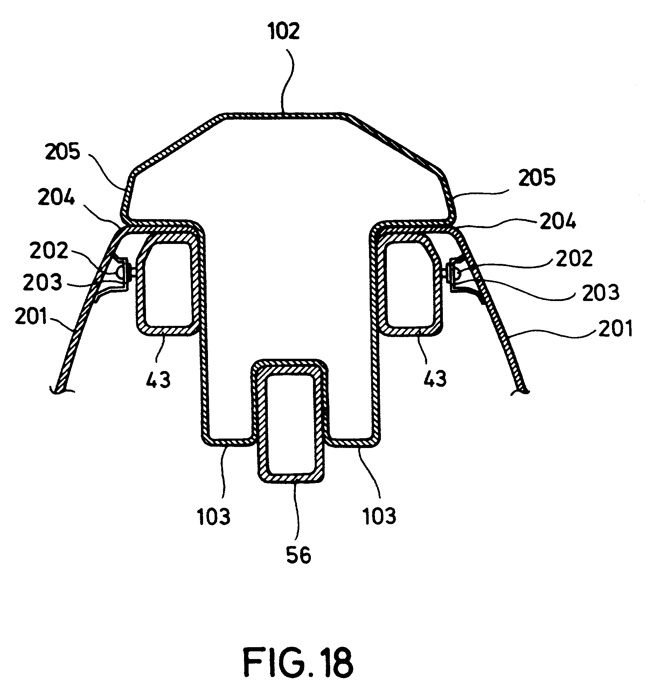

The construction as described in the proceeding paragraph may be best understood by reference to the second embodiment of the invention shown in Figures 15 through 18 which, except will hereandafter be noted, is the same as the proceeding embodiment. For that reason, components of this embodiment which are the same as those previously described have been identified by the same reference numerals as will not be described again. In this embodiment, it should be noted that the radiator side covers 201 are affixed to the side main frame members 43 and radiators 37 by threaded fasteners 202 that extend through recesses 203 formed in the radiator covers 201. The radiator covers 201 have upper peripheral edges 204 that are complimentary to the side surfaces 205 of the fuel tank 102. The nesting portions 103 of the fuel tank 102 around the center main frame member 56 also appears clearly in Figure 18.

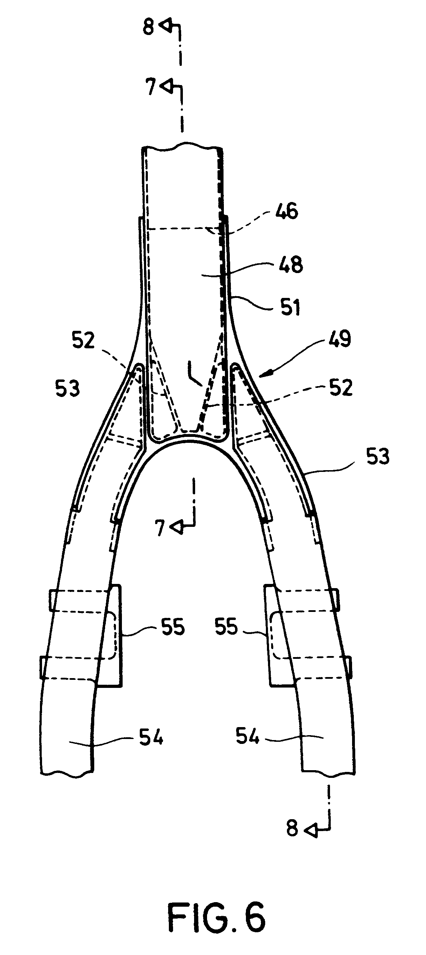

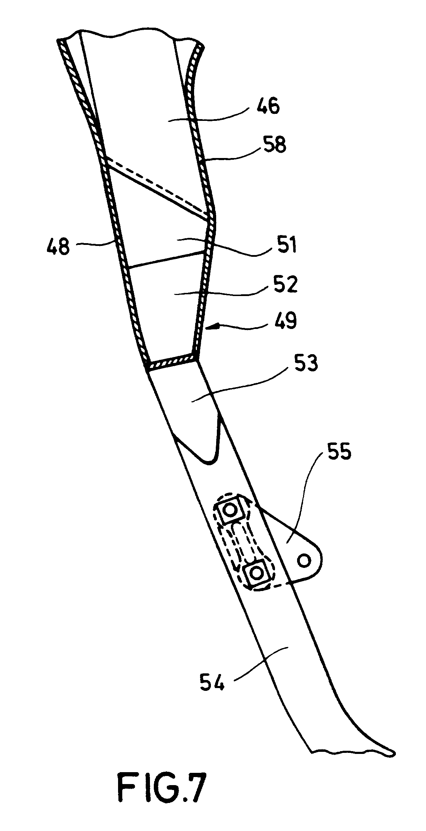

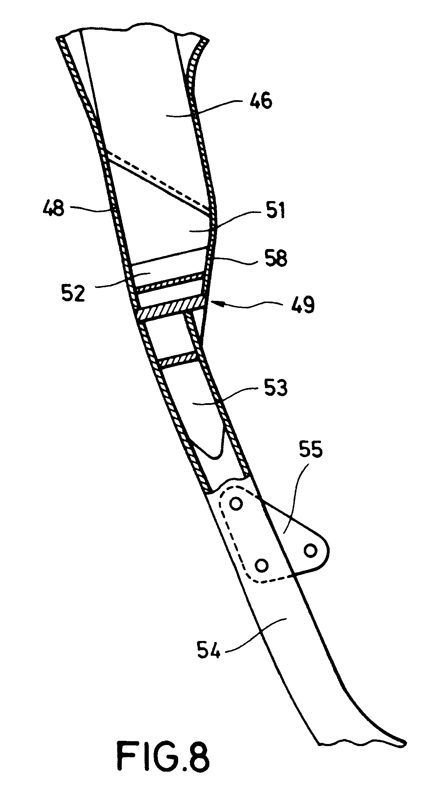

As may also been seen in Figure 18, as is the case in the embodiment of Figures 1 through 14, the fuel tank 102 has its side portions 205 extending outwardly beyoind the outer periphery of the pair of side main frame members 43. As a result, this provides a wider structure that provides a better riding position for the rider. The use of the center main frame member 56 dictates that the side main frame members 43 should be positioned close into the center of the motorcycle so as to improve the strength of the frame. If the fuel tank were no so widen, then a uncomfortable and unstable seating position would result.

The radiators covers 201 are provided with air relief openings 206 so that air which is passed across the radiators 37 may exit to the rear of the body without flow restriction to insure maximum cooling.

In this embodiment, the engine mount 59 is positioned rearwardly toward the pivot bolt 85 for the rear suspension element 76 and the cross member 62 is thus deleted. However, the cross member 86 is present in this embodiment so as to provide the rigidity for the frame structure and the interconnection between the center main frame 56 and the side main frame members 43. In this embodiment, the cross member 86 and pivot bolt 85 for the rear suspension element 76 are positioned forwardly of the rearward portion of the side frame members 43 relative to the previously described embodiment. That is, in this embodiment not only is the engine mount 59 move somewhat forwardly but also the center main frame member 56 is short in length than the previous described embodiment. As previously noted, in all other regards this embodiment is the same as those previously described and, for that reason, further description is not believed to be necessary.

Although two embodiments of the invention have been illustrated and described, each of which provides a very robust and yet lightweight frame construction, other forms of the invention are possible without departing from the scope of the invention, as defined by the appended claims.

## Claims

1. A frame construction for a motorcycle type of vehicle having a head pipe assembly including a head pipe (23) adapted to journal a front wheel (25) for steering movement, a pair of side main frame members (43) affixed to said head pipe assembly and extending downwardly and rearwardly therefrom to a pivot point for a rear wheel suspension (27) and a centre main frame member (56) affixed to said head pipe assembly and extending rearwardly therefrom, wherein the centre main frame member (56) extends at a different angle to the horizontal than said pair of side main frame members (43) and a cross member means (62, 86) is provided affixing said side main frame members (43) to each other rearwardly of said head pipe (23) and a down tube assembly affixed to the head pipe (24) between the side main frame members (43) is provided **characterised in that** the front end of the centre main frame member (56) is affixed to a lower portion of the head pipe assembly while the side main frame members (43) are affixed to the upper end thereof, and that the rear end of the centre main frame member (56) directly supports an upper end of a single rear shock absorber (76) which is substantially disposed in a centre area of the vehicle, and that the down tube assembly comprises a single down tube (46).

2. A frame construction as claimed in claim 1, **characterized in that**, the head pipe assembly comprises an upper portion of said down tube assembly to which the centre main frame member (56) is affixed.

3. A frame construction as claimed in claims 1 or 2, **characterized in that**, the angle of inclination of the side main frame members (43) to a notional horizontal is larger than that of the centre main frame member (56).

4. A frame construction as claimed in claim 3, **characterized in that**, the centre main frame member (56) extends generally horizontally while the side main frame members (43) extend generally in a rearward and downward direction, thus forming a stiffened triangular frame structure.

5. A frame construction as claimed in at least one of the preceding claims 1 to 4, **characterized in that**, the side main frame members (43) diverge from the head pipe (23) then turn and extend generally in a longitudinal direction, thus connecting the head pipe (23) to rear arm brackets for a rear wheel almost linearly.

6. A frame construction as claimed in at least one of the preceding claims 1 to 5, **characterized in that**, the centre main frame member (56) comprises an engine mount (59) rearwardly of the head pipe (23).

7. A frame construction as claimed in claim 6, **characterized in that**, the engine mount forms an engine mounting bracket (59) which is affixed to the centre main frame member (56) by means of a pair of spaced bolt assemblies (61) and a reinforcing cross member (62) extends outwardly from the opposite sides of the side main frame members (43) between the bolt assemblies (61).

8. A frame construction as claimed in at least one of the preceding claims 1 to 7, **characterized in that**, the cross member means comprises a cross-member (62) affixed to the side main frame members (43) contiguous to a suspension pick-up point (64) for the rear wheel (25).

9. A frame construction as claimed in at least one of the preceding claims 6 to 8, **characterized in that**, the engine mount (59) affixed to the centre main frame member (56) is contiguous to the cross member (62).

10. A frame construction as claimed in at least one of the preceding claims 6 to 9, **characterized in that**, the engine mount (59) affixed to the centre main frame member (56) is disposed forwardly of the cross member (86).

11. A frame construction as claimed in claim 10, **characterized in that**, the suspension pick-up point (85) is provided by the centre main frame member (56).

12. A frame construction as claimed in claim 11, **characterized in that**, the suspension pick-up point (85) is provided on the centre main frame member (56) at a point vertically above and to the rear of the pair of side main frame members (43) when viewed in side elevation.

13. A frame construction as claimed in at least one of the preceding claims 1 to 12, **characterized in that**, the down tube means being affixed to the head pipe (23) to extend downwardly and rearwardly therefrom and, moreover, being affixed to the side main frame members (43) adjacent a pivot point (64) for the rear wheel suspension (27).

14. A frame construction as claimed in claim 13, **characterized in that**, the pivot point (64) for the rear wheel suspension (27) is formed by a member (65) to which the down tube means and the pair of side main frame members (43) are directly attached.

15. A frame construction as claimed in at least one of the preceding claims 1 to 14, **characterized in** that the single shock absorber (76) is loaded between the rear wheel (25) and the rear end of the centre main frame member (56).

16. A frame construction as claimed in claim 15, **characterized in that**, the shock absorber (76) is pivotally connected to the rear end of the centre main frame member (56) at a point (85) to the rear of an above pair of side main frame members (43) when viewed in side elevation.

## Patentansprüche

1. Rahmenkonstruktion für ein motorradartiges Fahrzeug mit einer Kopfrohranordnung, die ein Kopfrohr (23) aufweist zur Lagerung eines Vorderrades (25) für eine Lenkbewegung, einem Paar Seiten-Hauptrahmenteilen (43), die an der Kopfrohranordnung befestigt sind und von dieser sich nach unten und nach hinten zu einem Gelenkpunkt für eine Hinterradaufhängung (27) erstrecken, und einem Mittel-Hauptrahmenteil (56), das an der Kopfrohranordnung befestigt ist und sich von dieser nach hinten erstreckt, wobei der Mittel-Hauptrahmenteil (56) sich unter einem anderen Winkel zur Horizontalen erstreckt als das Paar von Seiten-Hauptrahmenteilen (43), und eine Querteileinrichtung (62,56) vorgesehen ist, die die Seiten-Hauptrahmenteile (43) miteinander hinter dem Kopfrohr (23) verbindet, und eine Unterrohranordnung vorgesehen ist, die an dem Kopfrohr (24) zwischen den Seiten-Hauptrahmenteilen (43) befestigt ist, **dadurch gekennzeichnet,** daß das Vorderende des Mittel-Hauptrahmenteils (56) an einem unteren Abschnitt der Kopfrohranordnung befestigt ist, während die Seiten-Hauptrahmenteile (43) an den oberen Enden derselben befestigt sind, und daß das hintere Ende des Mittel-Hauptrahmen-teiles (56) unmittelbar ein oberes Ende eines einzigen hinteren Stoßdämpfers (76) abstützt, der im wesentlichen in einem Mittelbereich des Fahrzeuges angeordnet ist, und daß die Unterrohranordnung ein einziges nach unten gerichtetes Rohr (46) aufweist.

2. Rahmenkonstruktion nach Anspruch 1, **dadurch gekennzeichnet,** daß die Kopfrohranordnung einen oberen Abschnitt der Unterrohranordnung aufweist, an dem das Mittel-Hauptrahmenteil (56) befestigt ist.

3. Rahmenkonstruktion nach Anspruch 1 oder 2, **dadurch gekennzeichnet,** daß der Neigungswinkel der Seiten-Hauptrahmenteile (46) zu einer Horizontalen größer ist als der des Mittel-Hauptrahmenteils (56).

4. Rahmenkonstruktion nach Anspruch 3, **dadurch gekennzeichnet,** daß das Mittel-Hauptrahmenteil (56) sich im wesentlichen horizontal erstreckt, während die Seiten-Hauptrahmenteile (43) sich im wesentlichen nach hinten und unten erstrecken, zur Bildung einer versteiften dreieckigen Rahmenstruktur.

5. Rahmenkonstruktion nach zumindest einem der vorgenannten Ansprüche 1 bis 4, **dadurch gekennzeichnet,** daß die Seiten-Hauptrahmenteile (43) von dem Kopfrohr (23) auseinanderlaufen, sich dann krümmen und im wesentlichen in eine Längsrichtung erstrecken zur nahezu linearen Verbindung des Kopfrohres (23) mit Hinterarmbügeln für ein Hinterrad.

6. Rahmenkonstruktion nach zumindest einem der vorgenannten Ansprüche 1 bis 5, **dadurch gekennzeichnet,** daß das Mittel-Hauptrahmenteil (56) einen Motoranschluß (59) rückseitig des Kopfrohres (23) aufweist.

7. Rahmenkonstruktion nach Anspruch 6, **dadurch gekennzeichnet,** daß der Motoranschluß einen Motormontagebügel (59) bildet, der an dem Mittel-Hauptrahmenteil (56) durch ein Paar voneinander beabstandete Bolzenanordnungen (61) befestigt ist und ein Verstärkungs-Querteil (62) sich von den gegenüberliegenden Seiten der Seiten-Hauptrahmenteile (43) zwischen den Bolzenanordnungen (61) nach außen erstreckt.

8. Rahmenkonstruktion nach zumindest einem der vorgenannten Ansprüche 1 bis 7, **dadurch gekennzeichnet,** daß eine Querteileinrichtung das Querteil (62) aufweist, das an den Seiten-Hauptrahmenteilen (43) neben einem Aufhängungs-Aufnahmepunkt (64) des Hinterrades (25) angeordnet ist.

9. Rahmenkonstruktion nach zumindest einem der vorgenannten Ansprüche 6 bis 8, **dadurch gekennzeichnet,** daß der an dem Mittel-Hauptrahmenteil (56) befestigte Motoranschluß (59) neben dem Querteil (62) angeordnet ist.

10. Rahmenkonstruktion nach zumindest einem der vorgenannten Ansprüche 6 bis 9, **dadurch gekennzeichnet,** daß der an dem Mittel-Hauptrahmenteil (56) befestigte Motoranschluß (59) vorderseitig des Querteils (62) angeordnet ist.

11. Rahmenkonstruktion nach Anspruch 10, **dadurch gekennzeichnet,** daß der Aufhängungsaufnahmepunkt (85) durch das Mittel-Hauptrahmenteil (56) gebildet ist.

12. Rahmenkonstruktion nach Anspruch 11, **dadurch gekennzeichnet,** daß bei Betrachtung in der Seitenansicht der Aufhängungs-Aufnahmepunkt (85) an dem Mittel-Hauptrahmenteil (56) an einem Punkt vertikal über und nach hinten des Paars von Selten-Hauptrahmenteilen (43) angeordnet ist.

13. Rahmenkonstruktion nach zumindest einem der vorgenannten Ansprüche 1 bis 12, **dadurch gekennzeichnet,** daß die Unterrohrvorrichtung an dem Kopfrohr (23) sich von diesem nach unten und hinten erstreckend angeordnet ist und zudem an den Seiten-Hauptrahmenteilen (43) neben einem Gelenkpunkt (64) für die Hinterradaufhängung (27) befestigt ist.

14. Rahmenkonstruktion nach Anspruch 13, **dadurch gekennzeichnet,** daß der Gelenkpunkt (64) für die Hinterradaufhängung (27) durch ein Teil gebildet wird, an dem die Unterrohrvorrichtung und das Paar von Seiten-Hauptrahmenteilen (43) direkt befestigt ist.

15. Rahmenkonstruktion nach zumindest einem der vorgenannten Ansprüche 1 bis 14, **dadurch gekennzeichnet,** daß der einzige Stoßdämpfer (76) zwischen dem Hinterrad (25) und dem hinteren Ende des Mittel-Hauptrahmenteils (56) belastet ist.

16. Rahmenkonstruktion nach Anspruch 15, **dadurch gekennzeichnet,** daß der Stoßdämpfer (76) bei Betrachtung in der Seitenansicht mit dem hinteren Ende des Mittel-Hauptrahmenteils (56) an einem Punkt (85) rückwärts und oberhalb des Paares von Seiten-Hauptrahmenteilen (43) schwenkbar verbunden ist.

## Revendications

1. Construction de cadre, pour véhicule du type motocycle ayant un ensemble de tube de tête comportant un tube de tête (23) adapté comme tourillon d'une roue avant (25) pour un mouvement de direction, une paire d'éléments latéraux de cadre principal (43) fixés sur ledit ensemble de tube de tête et s'étendant vers le bas et vers l'arrière à partir de celui-ci vers un point de pivotement d'une suspension de roue arrière (27) et un élément central de cadre principal (56) fixé sur ledit ensemble de tube de tête et s'étendant vers l'arrière à partir de celui-ci, dans laquelle l'élément central de cadre principal (56) s'étend en faisant un angle par rapport à l'horizontal différent de ladite paire d'éléments latéraux de cadre principal (43) et un moyen formant éléments transversaux (62, 86) est agencé fixant l'un à l'autre lesdits éléments latéraux de cadre principal (43) vers l'arrière dudit tube de tête (23) et un ensemble de tube bas fixé sur le tube de tête (24) entre les éléments latéraux de cadre principal (43), caractérisée en ce que l'extrémité avant de l'élément central de cadre principal (56) est fixé sur une partie inférieure de l'ensemble de tube de tête alors que les éléments latéraux de cadre principal (43) sont fixés sur l'extrémité supérieure de celui-ci, et en ce que l'extrémité arrière de l'élément central de cadre principal (56) supporte directement une extrémité supérieure d'un seul amortisseur de choc arrière (76) qui est agencé à peu près dans une zone centrale du véhicule, et en ce que l'ensemble de tube bas comporte un seul tube bas (46).

2. Construction de cadre selon la revendication 1, caractérisée en ce que l'ensemble de tube de tête comporte une partie supérieure dudit ensemble de tube bas sur lequel l'élément central de cadre principal (56) est fixé.

3. Construction de cadre selon la revendication 1 ou 2, caractérisée en ce que l'angle d'inclinaison des éléments latéraux de cadre principal (43) par rapport à une horizontale imaginaire est plus grand que celui de l'élément central de cadre principal (56).

4. Construction de cadre selon la revendication 3, caractérisée en ce que l'élément central de cadre principal (56) s'étend de manière générale horizontalement alors que les éléments latéraux de cadre principal (43) s'étendent de manière générale dans une direction vers l'arrière et vers le bas, en formant ainsi une structure de cadre triangulaire raidie.

5. Construction de cadre selon l'une quelconque des revendications 1 à 4, caractérisée en ce que les éléments latéraux de cadre principal (43) divergent du tube de tête (23) puis tournent et s'étendent de manière générale dans une direction longitudinale, en reliant ainsi pratiquement linéairement le tube de tête (23) aux étriers de bras arrière d'une roue arrière.

6. Construction de cadre selon l'une quelconque des revendications 1 à 5, caractérisée en ce que l'élément central de cadre principal (56) comporte une monture de moteur (59) vers l'arrière du tube de tête (23).

7. Construction de cadre selon la revendication 6, caractérisée en ce que la monture de moteur forme un étrier de montage de moteur (59) qui est fixé sur l'élément central de cadre principal (56) par l'intermédiaire d'une paire d'ensembles de boulons espacés (61) et un élément transversal de renforcement (62) s'étend vers l'extérieur à partir des côtés opposés des éléments latéraux de cadre principal (43) entre les ensembles de boulons (61).

8. Construction de cadre selon l'une quelconque des revendications 1 à 7, caractérisée en ce que les moyens formant élément transversal comportent un élément transversal (62) fixé sur les éléments latéraux de cadre principal (43) en étant contigu à un point (64) de fixation de la suspension de la roue arrière (25).

9. Construction de cadre selon l'une quelconque des revendications 6 à 8, caractérisée en ce que la monture de moteur (59) fixée sur l'élément central de cadre principal (56) est contiguë à l'élément transversal (62).

10. Construction de cadre selon l'une quelconque des revendications 6 à 9, caractérisée en ce que la monture de moteur (59) fixée sur l'élément central de cadre principal (56) est agencée vers l'avant de l'élément transversal (86).

11. Construction de cadre selon la revendication 10, caractérisée en ce que le point de fixation de suspension (85) est fourni par l'élément central de cadre principal (56).

12. Construction de cadre selon la revendication 1, caractérisée en ce que le point de fixation de suspension (85) est agencé sur l'élément central de cadre principal (56) au niveau d'un point situé verticalement au dessus et vers l'arrière de la paire d'éléments latéraux de cadre principal (43) lorsqu'on regarde sur le côté.

13. Construction de cadre selon l'une quelconque des revendications 1 à 12, caractérisée en ce que les moyens formant tube bas sont fixés sur le tube de tête (23) pour s'étendre vers le bas et vers l'arrière de celui-ci et, de plus, sont fixés sur les éléments latéraux de cadre principal (43) en étant adjacents à un point de pivotement (64) de la suspension de la roue arrière (27).

14. Construction de cadre selon la revendication 13, caractérisée en ce que le point de pivotement (64) de la suspension de roue arrière (27) est formé par un élément (65) sur lequel les moyens formant tube bas et la paire d'éléments latéraux de cadre principal (43) sont directement fixés.

15. Construction de cadre selon l'une quelconque des revendications 1 à 14, caractérisée en ce que l'amortisseur de choc unique (76) est chargé entre la roue arrière (25) et l'extrémité arrière de l'élément central de cadre principal (56).

16. Construction de cadre selon la revendication 15, caractérisée en ce que l'amortisseur de choc (76) est relié de manière pivotante à l'extrémité arrière de l'élément central de cadre principal (56) au niveau d'un point (85) situé à l'arrière et au-dessus d'une paire d'éléments latéraux de cadre principal (43) lorsqu'on regarde sur le côté.
